# EUROPEAN PATENT APPLICATION

(11) **EP 4 518 044 A1**
(43) Date of publication of application: **05.03.2025**
(21) Application number: 24197125.8
(22) Date of filing: 29.08.2024
(51) Int. Cl.: H01R 13/629, H01R 13/641

(54) **CONNECTOR HOUSING ASSEMBLY AND CONNECTOR**

(30) Priority: 29.08.2023 DE 102023123221
(71) Applicant: TE Connectivity Solutions GmbH, 8200 Schaffhausen (CH)
(72) Inventor: BUCK, Carsten, 8200 Schaffhausen (CH); VEIHL, Maximilian, 8200 Schaffhausen (CH)
(74) Representative: Grünecker Patent- und Rechtsanwälte PartG mbB

(57) **Abstract**

The present invention relates to a connector housing assembly (1) comprising: a connector housing (10) for receiving at least one electrical terminal; a lever (20) for mating the connector housing with a mating connector (30) along a mating direction (A), wherein the lever (20), depending on its position, is pivotable and/or displaceable in relation to the connector housing (10). For improved operational safety, the lever (20) is first displaceable from an initial position to a rotation start position before it is pivotable. The connector housing assembly (1) furthermore comprises a displacement start blocking structure (40) which is configured to block displacement from the initial position to the rotation start position and which is releasable when the connector housing (10) is mated with the mating connector (30). The present invention additionally relates to a connector having such a connector housing assembly.

## Description

The present invention relates to a connector housing assembly and a connector comprising the connector housing assembly.

Connector housing assemblies which have a pivotable lever at a connector housing are known from prior art. By pivoting the lever, the connector housing can be mated or plugged together with a mating connector along a mating direction. The lever can also be displaced in a translatory manner to lock it.

However, there is a risk with such a known connector housing assembly of premature rotation of the lever when the mating connector is not yet in a predetermined position along a mating direction.

It is therefore the object of the present invention to provide a connector housing assembly with improved operational safety.

This object is satisfied according to the invention by a connector housing assembly comprising: a connector housing for receiving at least one electrical terminal; a lever for mating the connector housing with a mating connector along a mating direction, wherein the lever, depending on its position, is pivotable and/or displaceable in relation to the connector housing. In particular, the lever is first displaceable from an initial position to a rotation start position before it is pivotable. In other words, in the initial position, the lever can only be moved to the rotation start position, but is not pivotable. The connector housing assembly furthermore comprises a displacement start blocking structure which is configured to block the displacement from the initial position to the rotation start position and which is releasable when the connector housing is mated with the mating connector.

According to this aspect, incorrect use can be reliably suppressed. This is because the lever must first be displaced before it is rotatable. This can prevent the lever from rotating idle, i.e. when it is not yet in engagement with the mating connector. In addition, the translatory displacement can be blocked by the displacement start blocking structure. It can be released in particular by mating with the mating connector. This can prevent incorrect operation more reliably.

The invention can be further improved by the following configurations which are advantageous by themselves and which can be combined with one another at random.

The displacement start blocking structure preferably comprises a housing-side engagement section provided on a resilient arm section of the connector housing.

The displacement start blocking structure can therewith be released in a simple manner by the elastic deformation of the resilient arm section. The resilient arm section can be deformed in particular by contact with the mating connector. This contact with the mating connector can take place at a contact section of the resilient arm section.

The housing-side engagement section is preferably provided at a different position, in the mating direction and/or a direction intersecting the mating direction, than the contact section of the resilient arm section with the mating connector. In other words, the housing-side engagement section as well as the contact section with the mating connector are located at different positions.

This can ensure that the mating connector can be mated reliably with the connector housing because the housing-side engagement section does not obstruct the mating connector.

According to a further aspect, the connector housing assembly further comprises: a displacement end blocking structure configured to define the rotation start position.

A unique rotation start position, in particular a position after displacement, can therewith be specified, and further displacement can be blocked. In other words, the lever can be operated in a purely rotatory manner from the rotation start position. This simplifies operation.

According to yet another aspect, the lever can be slideable during the displacement motion along an axis formation section that forms the axis of the pivoting motion.

Therefore, the translatory motion of the lever can be guided at least in part by the axis formation section. At the same time, the number of components can be reduced.

According to yet another aspect, the connector housing assembly can further comprise a rotation guiding structure that is configured to guide a rotational motion of the lever.

According to this aspect, a pure rotational motion can be obtained because a translatory motion can be prevented by the rotation guiding structure.

Preferably, the rotation guiding structure comprises a slideway along which a peripheral section of the lever is slideable.

The lever can thus be guided in a simple manner. In particular, no guide link needs to be provided. For example, the outer periphery of the lever can instead be used for guiding.

According to yet another aspect, the connector housing assembly can further comprise a rotation blocking structure that is configured to block the rotational motion before the rotation start position has been reached.

In this way, pure translatory displacement of the lever can initially be reliably obtained.

The rotation blocking structure is preferably provided at two different positions in the circumferential direction about the pivot axis.

Better load distribution can thus be achieved for an attempted rotation.

At least part of the rotation guiding structure preferably adjoins at least part of the rotation blocking structure.

The configuration can thus be made to be particularly simple. The rotation guiding structure and the rotation blocking structure can therefore be formed by a connector housing section, where they can be continuous surfaces of the connector housing section.

According to yet another aspect, a maximum lever arm length of the lever in the rotation start position can be greater than in the initial position.

Mating with the mating connector can thereby be made efficient, since the force to be applied by an operator is reduced due to leverage.

Preferably, the lever has an eccentric control section that is engageable with the mating connector for mating.

The eccentric control section can engage with an engagement section of the mating connector, whereby the relative advance rate between the connector housing and the mating connector in the mating direction can be controlled in relation to the angle of rotation of the lever. The force that an operator applies to the lever can then be used to transmit it at the eccentric control section to the mating connector. The lever can therefore be used to assist the mating process.

The eccentric control section is preferably formed to be tooth-like.

A tooth-like eccentric control section can enable uniform mating with the mating connector. Furthermore, a toothing can be formed in a simple manner and makes the configuration compact.

According to yet another aspect, the connector housing assembly can further comprise a retaining structure that is configured to retain the lever in the rotation start position.

Unwanted rotation in the rotation start position can thus be prevented. Only when a predetermined force is applied can the rotation retaining structure be released and the rotation take place.

According to yet another aspect, the lever and/or the connector housing can be injection-molded.

This simplifies the manufacture of the lever and/or the connector housing. In addition, the above-mentioned structures can be obtained in a simple manner. Thermoplastic plastic material can be used as the material.

According to yet another aspect, the connector housing can comprise a guiding section that is configured to guide the mating connector parallel to the mating direction.

A translatory motion of the mating connector can therewith be reliably obtained even when the lever is rotated.

A further aspect provides a connector that comprises the connector housing assembly according to at least one of the preceding aspects.

This makes it possible to provide a connector with increased operational safety.

Depending on the application, the connector can comprise electrical, optical, or opto-electrical contact elements that are connected to correspondingly formed complementary mating contacts of the mating connector when paired.

The present invention shall now be described in detail with reference to the accompanying drawings. The drawings show exemplary embodiments whose different features can be combined with one another as desired in accordance with the above comments. In particular, individual features can be added to the described embodiments in accordance with the above explanations if the effect of these features is necessary for a specific application. Conversely, individual features can be omitted from the existing embodiments if the technical effect of these features is not important in a specific application. Similar, identical, and functionally identical elements in the drawings are provided with the same reference numerals to the extent as appropriate.
- Fig. 1: shows a connector housing assembly in a view from the outside in an initial position of the lever;
- Fig. 2: shows the connector housing assembly in a rotation start position of the lever;
- Fig. 3: shows the connector housing assembly in a rotated position of the lever;
- Fig. 4: shows the connector housing assembly in a rotation end position of the lever;
- Fig. 5: shows an enlarged view of a part of the connector housing assembly in the initial position;
- Fig. 6: shows a view of the connector housing assembly from the inside in the initial position;
- Fig. 7: shows a view of the connector housing assembly from the inside in the rotation start position; and

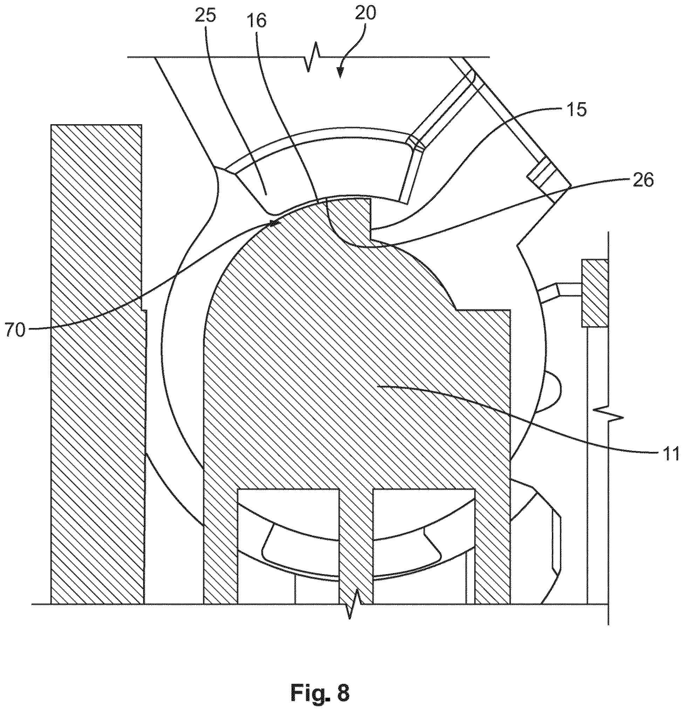

- Fig. 8: shows a view of the connector housing assembly from the inside in the rotated position of the lever.

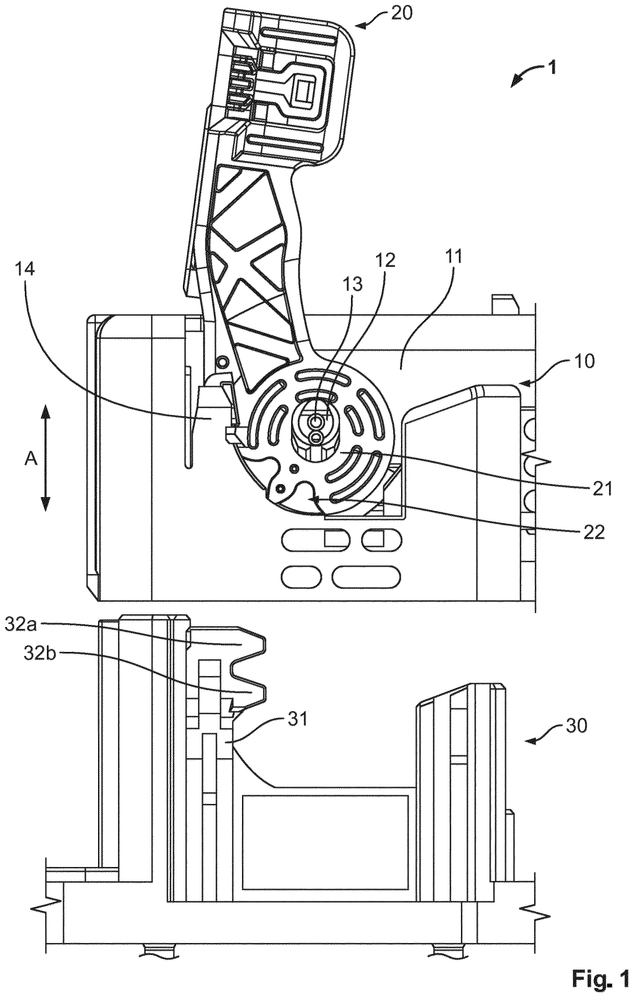

Figures 1 to 4 show a connector housing assembly 1 in the initial position, rotation start position, rotated position, and end position in that order. Connector housing assembly 1 comprises the components connector housing 10 and lever 20.

Connector housing assembly 1 can be used, for example, in a connector for high-voltage applications. The connector comprises at least one electrical terminal received in the interior of connector housing 10.

Connector housing 10 therefore has a housing function. It has a substantially parallelepiped shape. It comprises two wall sections 11 which are respective oppositely disposed side wall sections, receive the at least one terminal therebetween, and are disposed opposite each other in a transverse direction. The transverse direction is perpendicular to a mating direction A shown in Figures 1 to 4. Mating direction A is parallel to a longitudinal direction of the electrical terminal.

Each side wall section 11 comprises an axis formation section 12 defining a pivot axis 13 at a center thereof. Axis formation section 12 projects from an outer surface of side wall section 11 and serves as a support section for lever 20.

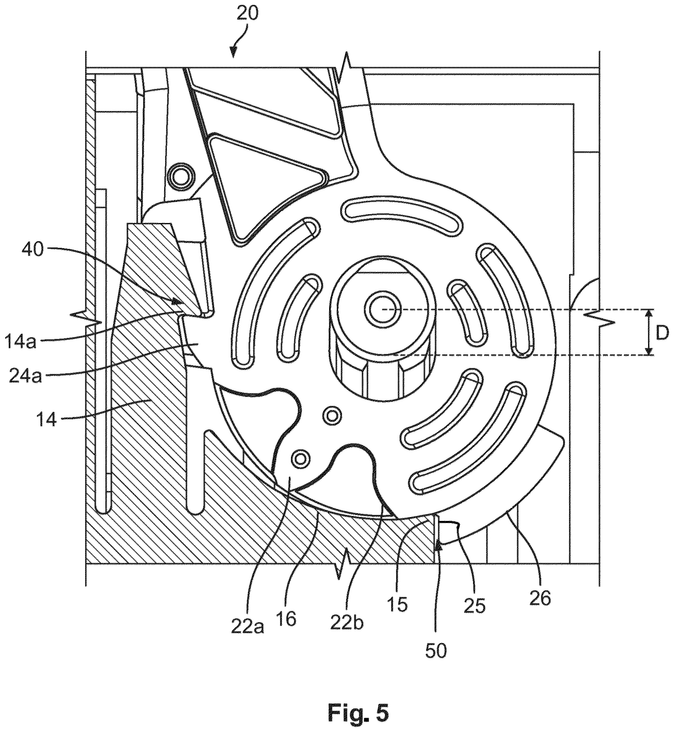

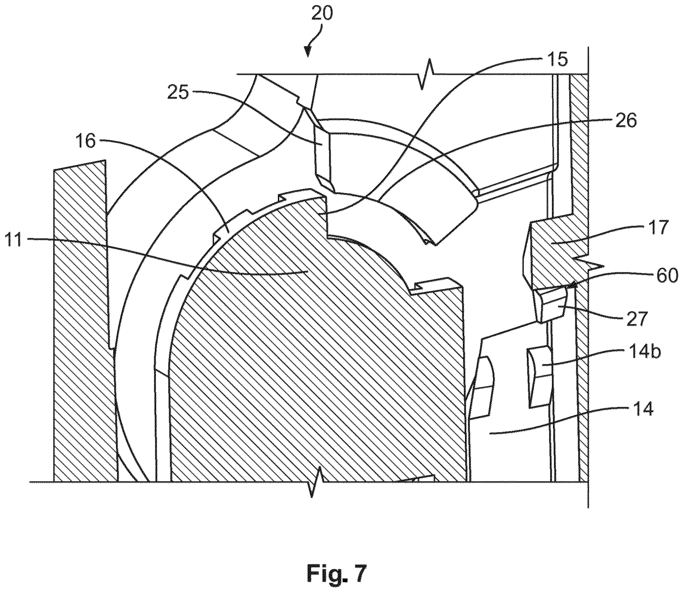

Connector housing section 10 further comprises a resilient arm section 14 which is formed to be cantilevered and offset from the remainder of side wall section 11. As can be seen in Figure 5, arm section 14 comprises a projection section 14a which projects in the direction of the pivot axis on an arm section which in mating direction A faces away from a mating connector 30. Resilient arm section 14 furthermore comprises a contact section 14b with mating connector 30. In the present case, it is formed on the inner side of arm section 14 by two projections, as can be seen in Figure 7. In a direction perpendicular to mating direction A and the transverse direction, projection section 14a is located closer to pivot axis 13 than contact section 14b and in mating direction A farther on the side of connector housing 10.

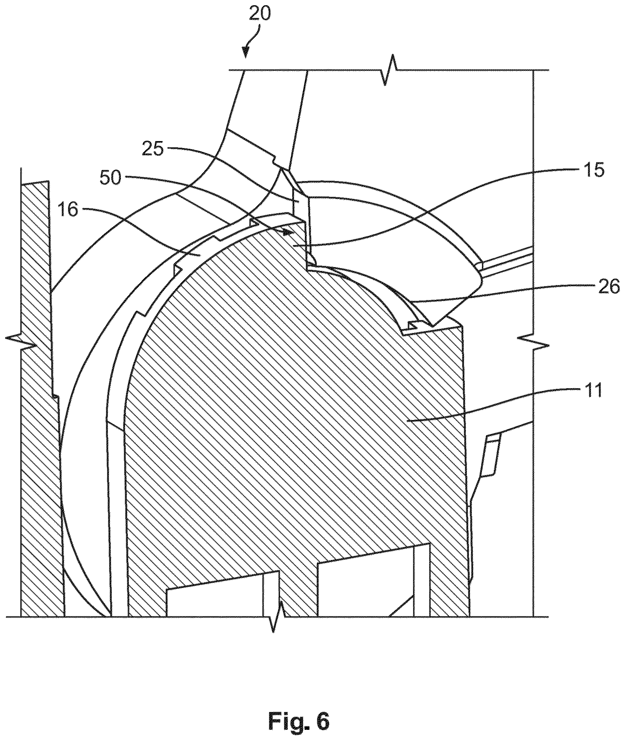

As can be seen in Figures 5 and 6, connector housing section 10 comprises rotation blocking sections 15 on the housing side, one being provided on an outer side and the other on an inner side of side wall section 11. Rotation blocking sections 15 are substantially aligned in the circumferential direction (presently perpendicular to mating direction A and the pivot axis). This means that they have contact surfaces that point in the circumferential direction. Rotation blocking sections 15 are provided at two positions in the circumferential direction, in particular axially symmetrical to pivot axis 13.

Furthermore, connector housing 10 comprises rotation guiding sections 16 on the housing side, which are each also provided in the transverse direction on different sides of side wall section 11. They are configured as a slideway that extends substantially in the circumferential direction. It is to be noted that two rotation guiding sections 16 are likewise provided in the circumferential direction, preferably axially symmetrical to pivot axis 13. Rotation blocking sections 15 and rotation guiding sections 16 are each formed by a connector housing section. Their surfaces are therefore continuous with each other and they share at least one coupling section.

In addition, as can be seen in Figure 7, a retaining projection 17 is provided at side wall section 11. It projects in the direction perpendicular to the mating direction and the transverse direction and is located in said direction farther away from pivot axis 13 than projection section 14a and contact section 14b. In the mating direction it is located farther on the side of connector housing 10.

Although not shown, lever 20 has an overall U-shape with two legs disposed opposite in the transverse direction and a connecting section connecting in the transverse direction.

Each leg has a lever bearing section 21 at an end section disposed opposite the connecting section. Lever bearing section 21 is an elongate hole which in the width direction has substantially the diameter of axis formation section 12 and is formed to be longer in the longitudinal direction.

When viewed in the transverse direction (along pivot axis 13), the end section is formed to be predominantly circular and merges into an extension section which extends to the connecting section.

The end section comprises an eccentric control section 22 at the periphery of the circular section. It is tooth-shaped and presently comprises two teeth 22a, 22b along the circumferential direction.

Furthermore, a locking projection 24a is provided on an outer side of lever 20 which projects away from the pivot axis.

Formed in the transverse direction projecting on an outer side and on an inner side is a rotation blocking section 25 on the lever side. Two rotation blocking sections 25 formed in this manner are substantially aligned in the circumferential direction (presently perpendicular to mating direction A and the pivot axis). This means that they have contact surfaces that point in the circumferential direction. Rotation blocking sections 25 are provided in two positions in the circumferential direction, in particular axially symmetrically to pivot axis 13.

Rotation blocking section 25 on the lever side is respectively adjoined by a rotation guiding section 26 on the lever side. The rotation guiding sections are also provided in two positions in the circumferential direction and on their periphery, which extends in the circumferential direction, correspond to rotation guiding sections 16 on the housing side.

In addition, as can be seen in Figure 7, a retaining projection 27 on the lever side is provided projecting on an inner side of lever 20. In the direction perpendicular to mating direction A and transverse direction, it is located farther away from pivot axis 13 than locking projection 24a, rotation blocking sections 25 and rotation guiding sections 26.

Mating connector 30 is moved relative towards connector housing 10 in mating direction A in Figures 1 to 4. It comprises an arm 31 pointing in the mating direction. At its end section on the side of the connector housing, teeth 32a, 32b are provided on a side facing pivot axis 13 and are spaced apart in mating direction A.

Functions and effects shall now be described.

Furthermore, the connector housing assembly comprises a displacement start blocking structure 40. It comprises projection section 14a and locking projection 24a, which are disposed opposite to each other in the mating direction (in the longitudinal direction of the elongate hole), and thus prevent a displacement of lever 20 along the elongate hole to the side of the connector housing (upwardly in the figures) in the initial position of Figure 1.

Only when arm 31 of mating connector 31 comes into contact with contact section 14b of resilient arm section 14 is resilient arm section 14 bent outwardly and displacement start blocking structure 40 is released. Tooth 32a can come into contact with lever 20 to perform the displacement. The connector housing assembly can therefore be configured such that mating connector 30 performs the displacement motion.

A rotation blocking structure 50 blocks the rotation of lever 20 at least in the initial position, but presently up to the rotation start position. It comprises rotation blocking sections 15 on the housing side and rotation blocking sections 25 on the lever side which are each disposed opposite one another in the circumferential direction and thus block the rotation. It is to be noted that in Figure 5, part of side wall section 11, on which rotation blocking structure 50 is formed, has been cut out so that rotation blocking structure 50 is exposed.

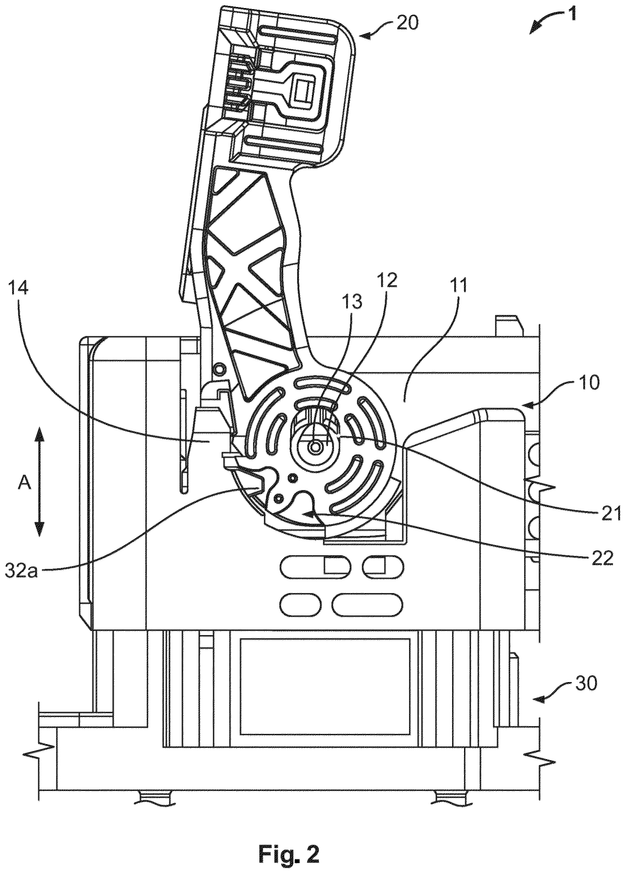

Lever 20 can then be moved upwardly. A displacement end blocking structure defines the end of the displacement and therefore the position/pose of lever 20 in the rotation start position in Figure 2. It comprises an end section of the elongate hole and the end section of axis formation section 12, each on the side of the mating connector.

When moving from the initial position to the rotation start position, the border of the elongate hole slides along the axis formation section by distance D in Figure 5. The translatory motion is guided in this manner. At the same time, rotation blocking sections 15, 25 are also displaced in a translatory manner relative to one another by distance D. This releases rotation blocking structure 50. A maximum lever length (distance between pivot axis 13 and the connecting section of lever 20) increases due to the displacement.

In the rotation start position, retaining projection 17 is disposed in mating direction A opposite retaining projection 27 on the lever side at a position spaced from pivot axis 13, so that rotation is initially prevented. A retaining structure 60 regarding the rotation position is thus formed. Since retaining projections 17, 27 comprise corresponding sections that are inclined in mating direction A, they can slide along one another so that the rotation is started.

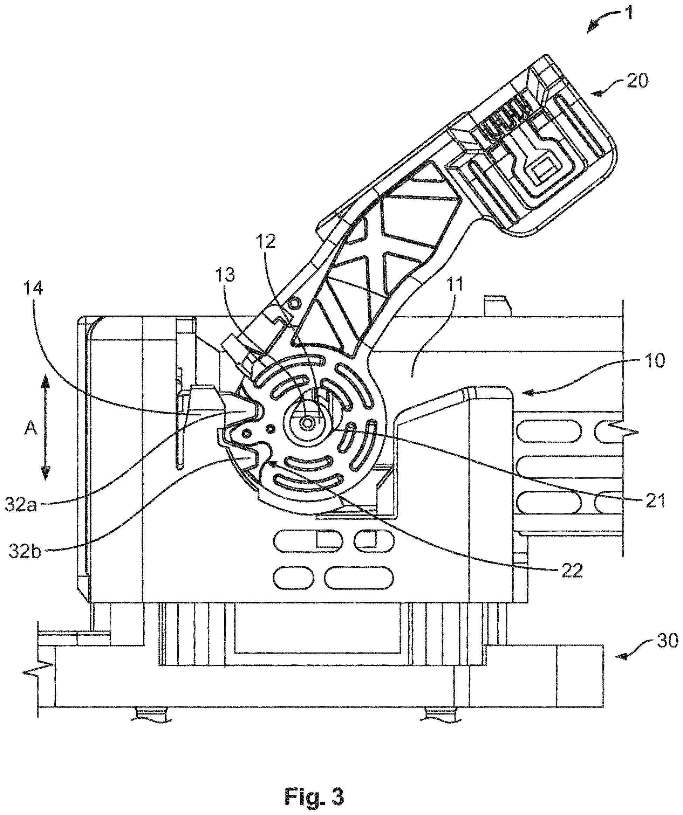

In Figure 3, lever 20 can then be rotated/pivoted by an operator to mate with mating connector 30. A rotation guiding structure 70 comprises rotation guiding sections 16, 26 which each adjoin an end section in the direction of displacement of rotation blocking sections 15, 25 in the circumferential direction. The rotational motion can be guided in this manner. In this embodiment, rotation guiding structure 70 is formed at least in part by rotation blocking structure 50.

Teeth 22a, 22b of eccentric control section 22 engage with teeth 32a, 32b and displace connector housing assembly 10 in mating direction A relative to mating connector 30.

It is there advantageous to have connector housing 10 comprise a guiding section that guides mating connector 30 in mating direction A.

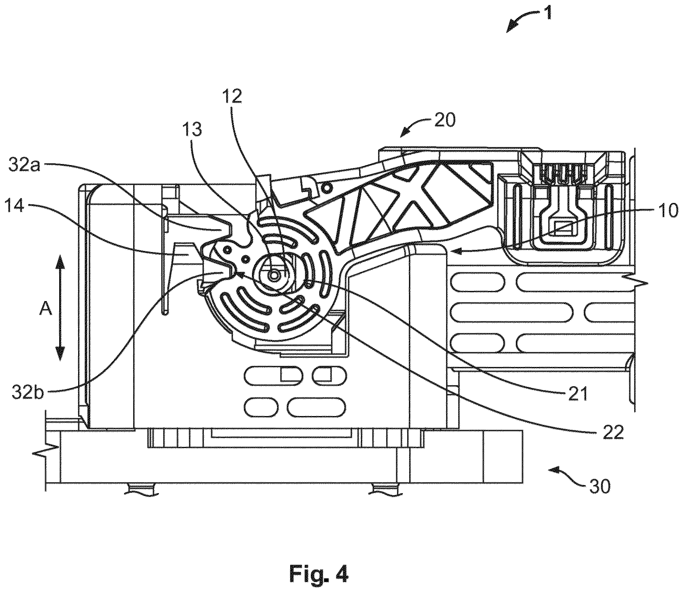

In Figure 4, the rotation end position of lever 20 has finally been reached. Lever 20 can be locked in the rotation end position by way of a locking structure to connector housing 10.

In the embodiment, the housing-side engagement section is projection section 14a. However, it can also be formed as a depression.

### Reference characters

- 1: connector housing assembly
- 10: connector housing
- 11: side wall section
- 12: axis formation section
- 13: axis of rotation
- 14: resilient arm section
- 14a: projection section (housing-side engagement section)
- 14b: contact section
- 15: rotation blocking section on the housing side
- 16: rotation guiding section on the housing side
- 17: retaining projection on the housing side
- 20: lever
- 21: lever bearing section
- 22: eccentric control section
- 22a, b: tooth
- 24a: locking projection
- 25: rotation blocking section on the lever side
- 26: rotation guiding section on the lever side
- 27: retaining projection on the lever side
- 30: mating connector
- 31: arm of the mating connector
- 32a, b: tooth of the mating connector
- 40: displacement start blocking structure
- 50: rotation blocking structure
- 60: retaining structure
- 70: rotation guiding structure

- A: mating direction
- D: displacement path

## Claims

1. Connector housing assembly (1) comprising:
a connector housing (10) for receiving at least one electrical terminal;
a lever (20) for mating said connector housing with a mating connector (30) along a mating direction (A), wherein said lever (20), depending on its position, is pivotable and/or displaceable in relation to said connector housing (10); wherein
said lever (20) is first displaceable from an initial position to a rotation start position before it is pivotable, and
said connector housing assembly (1) furthermore comprises a displacement start blocking structure (40) which is configured to block a displacement from the initial position to the rotation start position and which is releasable when said connector housing (10) is mated with said mating connector (30).

2. Connector housing assembly (1) according to claim 1,
wherein said displacement start blocking structure (40) comprises a housing-side engagement section (14a) which is provided on a resilient arm section (14) of said connector housing (10).

3. Connector housing assembly (10) according to claim 2,
wherein said housing-side engagement section (14a) is provided, in said mating direction (A) and/or in a direction intersecting said mating direction (A), at a different position than a contact section (14b) of said resilient arm section (14) with said mating connector (14).

4. Connector housing assembly (1) according to any one of claims 1 to 3,
furthermore comprising: a displacement end blocking structure configured to define the rotation start position.

5. Connector housing assembly (1) according to any one of claims 1 to 4,
wherein said lever (20) is slideable during the displacement motion along an axis formation section (12) that forms the axis (13) of the pivoting motion.

6. Connector housing assembly (1) according to any one of claims 1 to 5,
further comprising: a rotation guiding structure (70) that is configured to guide the rotational motion of said lever (20).

7. Connector housing assembly (1) according to claim 6,
wherein said rotation guiding structure (70) comprises a slideway along which a peripheral section of said lever (20) is slideable.

8. Connector housing assembly (1) according to any one of claims 1 to 7,
further comprising: a rotation blocking structure (50) that is configured to block a rotational motion before the rotation start position has been reached.

9. Connector housing assembly (1) according to claim 6 or 7 and 8,
wherein at least part of said rotation guiding structure (70) adjoins at least part of said rotation blocking structure (50).

10. Connector housing assembly (10) according to any one of claims 1 to 9,
wherein a maximum lever arm length of said lever (20) in the rotation start position is greater than in the initial position.

11. Connector housing assembly (1) according to any one of claims 1 to 10,
wherein said lever (20) comprises an eccentric control section (22) that is engageable with said mating connector (30) for mating.

12. Connector housing assembly (1) according to claim 11,
wherein said eccentric control section (22) is formed to be tooth-like.

13. Connector housing assembly (1) according to any one of claims 1 to 12, furthermore comprising:
a retaining structure (60) configured to retain said lever (20) in the rotation start position.

14. Connector housing assembly (1) according to any one of claims 1 to 13,
wherein said connector housing (10) comprises a guiding section that is configured to guide said mating connector (30) parallel to the mating direction.

15. Connector comprising said connector housing assembly (1) according to at least one of the preceding claims.
